# EUROPEAN PATENT SPECIFICATION

(11) **EP 4 278 865 B1**
(45) Date of publication and mention of the grant of the patent: **09.04.2025**
(21) Application number: 22700906.5
(22) Date of filing: 10.01.2022
(51) Int. Cl.: H05B 47/105, H05B 47/19

(54) **A CONTROLLER FOR CONFIGURING A LIGHTING SYSTEM AND A METHOD THEREOF**
STEUERUNG ZUR KONFIGURATION EINES BELEUCHTUNGSSYSTEMS UND VERFAHREN DAFÜR
SYSTÈME DE COMMANDE POUR CONFIGURER UN SYSTÈME D'ÉCLAIRAGE ET PROCÉDÉ ASSOCIÉ

(30) Priority: 15.01.2021 EP 21151762
(43) Date of publication of application: 22.11.2023
(73) Proprietor: Signify Holding B.V., 5656 AE Eindhoven (NL)
(72) Inventor: MEERBEEK, Berent, Willem, 5656 AE Eindhoven (NL)
(74) Representative: Verweij, Petronella Daniëlle
(86) International application number: PCT/EP2022/050329
(87) International publication number: WO 2022/152648

(56) References cited:
- EP-A1- 2 823 692
- EP-A1- 3 096 304
- EP-B1- 2 823 692
- US-A1- 2019 215 460

## Description

### FIELD OF THE INVENTION

The invention relates to a method of configuring a lighting system and to a computer program product for executing the method. The invention further relates to a controller for configuring a lighting system and to a lighting system comprising the controller. The invention further relates to a kit of parts.

### BACKGROUND

Connected lighting systems offer users new possibilities for controlling lighting units. As connected (home) lighting systems continue to grow, configuration of such systems becomes more complex. If a user adds a new control device, such as a light switch, to a lighting system, the user needs to assign certain functionalities to the input elements (e.g. buttons, rotary elements, touch-sensitive surfaces, etc.). To do so, the user has to assign the new light switch to a room, and then assign certain light settings to the different input elements. This is all done manually via a software application that typically runs on a handheld device such as a smartphone. If a user wishes to reconfigure the light switch, similar manual steps need to be performed.

US 20190215460 A1 discloses a user interface configured to display one or more symbols for image capture by an image capture device. A computing device with image processing software may be used to process the image to detect the symbol and determine a control function associated with the symbol for controlling one or more building system components.

### SUMMARY OF THE INVENTION

It is an object of the present invention to improve the process of configuring a lighting control device such as a light switch.

According to a first aspect of the present invention, the object is achieved by a method of configuring a lighting system, the lighting system comprising a lighting control device and a memory, the lighting control device comprising a user input element, wherein the user input element comprises an icon indicative of a control function of the lighting system, the method comprising:
- obtaining an image comprising the lighting control device,
- analyzing the image,
- identifying the user input element in the image,
- identifying the icon that has been applied to the user input element,
- determining the control function of the identified icon,
- configuring the lighting system by associating the control function with the user input element and storing an association between the control function and the user input element in the memory, such that when the user input element is activated by a user, one or more lighting units of the lighting system are controlled in accordance with the control function.

The icon located on the user input element (e.g. a button, rotary element, touch sensitive surface, etc.) is indicative of the lighting control function that the user input element is to perform. The icon may be applicable to the user input element by a user. The user may use a camera to capture the image of the lighting control device (e.g. a wall-mounted lighting control device or a portable lighting control device, for instance a light switch), whereupon one or more user input elements and their respective icons are identified in the image. Then, a control function of a respective identified icon is determined based on the identification, and the control function as indicated by the respective icon is associated with the respective user input element. The association may be stored in a memory of the lighting system. A (central) controller of the lighting system may use the stored associations to control the one or more lighting units. As a result, the lighting control device is configured according to the icon(s) that has been placed on the user input element(s), and when a user would activate the user input element, one or more lighting units of the lighting system are controlled according to the lighting control function associated with the activated user input element. This is beneficial, because the lighting control device is automatically configured, thereby improving the process of configuring the lighting control device.

The control function of the identified icon may be related to an area of the lighting system, and the lighting system may be configured by associating the area with the user input element, such that when the user input element is activated by a user, one or more lighting units located in the area are controlled. The area is a space (e.g. a (part of) a room) wherein the one or more lighting units is located. The lighting units located in the area may for instance be controlled according to a predefined light setting, a user-defined light setting or a system-defined light setting. The area (e.g. a room, or a part of a room such as a entertainment zone) may be defined in a memory of the lighting system, which may store information about the lighting units located in that area. A user may, for example, have access to icons that can be attached to the user input element. This is beneficial, because the user input element is automatically configured such that it controls one or more lighting units in the area.

A control function of the identified icon may be related to a light setting, and the lighting system may be configured by associating the light setting with the user input element, such that when the user input element is activated by a user, one or more lighting units of the lighting system are controlled according to the light setting. The light setting may be stored in a memory and retrieved from the memory when the user provides the user input at a user input element. This is beneficial, because the user input element is automatically configured such that it controls one or more lighting units of the lighting system according to the light setting when the user input element has been activated by a user. In the context of the present invention, the term "light setting" is to be understood as a lighting control setting according to which the lighting devices may be controlled. The light setting may, for example, define the brightness, color, saturation, beam angle, etc. of the light outputs of one or more lighting units. The light setting may be an on setting, an off setting, a go-to-sleep setting, a wake-up setting, etc. The light setting may, for example, be a light scene for multiple static and/or dynamic light settings such as a sunset scene or a candlelight scene.

The icon may have a color, and the color of the icon may be indicative of a light color of the light setting. A user may, for example, have access to multiple colored icons that can be attached to the user input elements. This enables the user to select a color for a specific user input element, attach the attachable icon to that user input element, whereupon the lighting system is configured accordingly.

A control function of the icon may be related to a type of lighting unit, and the lighting system may be configured by associating the type of lighting unit with the user input element, such that when the user input element is activated by a user, one or more lighting units of the type are controlled. This is beneficial, because the user input element is automatically configured such that it controls one or more lighting units of the type indicated by the icon when the user input element has been activated by a user. The lighting units of the type (e.g. a spotlight, an LED strip, a pendant luminaire, etc.) may for instance be controlled according to a predefined light setting, a user-defined light setting or a system-defined light setting.

The icon may have been applied to the user input element by a user. This is beneficial, because the user may apply user-recognizable icons (e.g. icons of areas, types of lighting units, light settings, etc.) to the user input element to configure the lighting control device. The icon has been applied to the respective user input elements before the image has been captured. The user may be provided with a plurality of attachable icons (e.g. adhesive stickers, removeable vinyl stickers, etc.) which may be attached to the user input elements. Alternatively, the icon may for example be drawn on the user input element of the lighting control device by the user.

The lighting control device may comprise a second user input element comprising a second icon indicative of a second control function. The method may further comprise:
- identifying the second user input element in the image,
- identifying the second icon that has been applied to the second user input element,
- determining the second control function of the identified icon,
- configuring the lighting system by associating the second control function
with the second user input element, such that when the second user input element is activated by a user, one or more lighting units of the lighting system are controlled in accordance with the second control function. The (first) user input element and the second user input element are both identified (and thereby distinguished) in the image, which enables determining which user input element is which.

The steps of identifying the user input element and the second user input element may comprise: determining an orientation of the lighting control device, and identifying the user input element and the second user input element in the image based on the orientation of the lighting control device. This is beneficial for lighting control devices which for which the user input elements (e.g. buttons) are arranged in a symmetrical arrangement, because it may occur that the locations of the different user input elements are ambiguous due to the symmetry. The orientation may, for instance, be determined by detecting one or more surface features of the lighting control element indicative of an orientation of the lighting control device, be determined based on a signal received from an orientation sensor of the lighting control device, be determined based on a user input received from a user via a user interface, etc.

The user input element may comprise a plurality of icons, each indicative of a respective control function, and the lighting system may be configured by associating the plurality of control functions with the user input element, such that when the user input element is activated by a user, one or more lighting units of the lighting system are controlled in accordance with the plurality of control functions. A first icon may, for example, be indicative of an area of the lighting system, and a second icon of the same user input element may, for example, be indicative of a light setting. The lighting system may then be configured such that when a user provides a user input at that user input element, one or more lighting units located in the area are controlled according to the light setting.

The step of determining the control function of the identified icon may comprise: accessing a memory, the memory storing associations between icons and control functions, comparing the identified icon with the stored icons, and selecting, based on the comparison, for the identified icon a respective control function. This is beneficial because by comparing the icon to a set of known icons, the control function can be determined without requiring image analysis techniques. Alternatively, the step of determining the control function of a respective identified icon may comprise analyzing the image and applying image recognition techniques to identify the control function of the icon based on one or more features of the icon. This is beneficial because a larger variety of icons, and even initially unknown icons, may be identified.

The method may further comprise:
- obtaining a second image captured by the camera, the second image capturing the lighting control device,
- analyzing the second image,
- identifying the user input element in the second image,
- identifying a new icon on the user input element,
- determining that the new icon has replaced the icon that was previously located on the user input element,
- determining a new control function of the identified new icon, and
- configuring the lighting system by associating the new control function with the user input element, such that when the user input element is activated by a user, one or more lighting units of the lighting system are controlled in accordance with the new control function.. This is beneficial, because by replacing the previous icon with the new icon, the user can reconfigure the already configured lighting control device.

According to a second aspect of the present invention, the object is achieved by a computer program product for a computing device, the computer program product comprising computer program code to perform any of the above-mentioned methods when the computer program product is run on a processing unit of the computing device.

According to a third aspect of the present invention, the object is achieved by a controller for configuring a lighting system, the lighting system comprising a lighting control device and a memory, the lighting control device comprising a user input element, wherein the user input element comprises an icon indicative of a control function of the lighting system, the controller comprising:
an input configured to obtain an image comprising the lighting control device,, and
a processor configured to
   - analyze the image,
   - identify the user input element in the image,
   - identify the icon that has been applied to the user input element,
   - determine the control function of the identified icon,
   - configure the lighting system by associating the control function with the user input element and store an association between the control function and the user input element in the memory, such that when the user input element is activated by a user, one or more lighting units of the lighting system are controlled in accordance with the control function.

According to a fourth aspect of the present invention, the object is achieved by a lighting system comprising:
- the controller,
- a plurality of icons attachable to the user input element by a user, wherein the icons are indicative of respective control functions of the lighting system, and
- one or more lighting units.

According to a fifth aspect of the present invention, the object is achieved by a kit of parts comprising:
- a lighting control device comprising a user input element for controlling a lighting unit of a lighting system,
- a plurality of icons attachable to the user input elements by a user, wherein the icons are indicative of respective control functions of the lighting unit, and
- a computer program product for a computing device, the computer program product comprising computer program code to perform, when the computer program product is run on a processing unit of the computing device, the steps of:
   obtaining an image comprising the lighting control device,
   analyzing the image,
   identifying the user input element in the image,
   identifying the icon that has been applied to the user input element,
   determining the control function of the identified icon,
   configuring the lighting system by associating the control function with the user input element and storing an association between the control function and the user input element in a memory, such that when the user input element is activated by a user, one or more lighting units of the lighting system are controlled in accordance with the control function.

It should be understood that the computer program product, the controller, the system and the kit of parts may have similar and/or identical embodiments and advantages as the above-mentioned methods.

In the context of the present invention, the term "control function" is to be understood as one or more control settings or control rules for one or more lighting units when a user input element of a lighting control device is activated.

### BRIEF DESCRIPTION OF THE DRAWINGS

The above, as well as additional objects, features and advantages of the disclosed systems, devices and methods will be better understood through the following illustrative and non-limiting detailed description of embodiments of devices and methods, with reference to the appended drawings, in which:
Fig. 1 shows schematically a system comprising a controller, a lighting control device and a lighting unit;
Fig. 2 shows schematically a portable device for configuring a lighting control device;
Fig. 3 shows schematically a system comprising a controller, a lighting control device, a lighting unit and a central control device;
Figs. 4a, 4b and 4c show schematically icons on input elements of a lighting control device;
Fig. 5 shows schematically a kit of parts comprising a plurality of attachable icons and a lighting control device; and
Fig. 6 shows schematically a method of configuring a lighting system.

All the figures are schematic, not necessarily to scale, and generally only show parts which are necessary in order to elucidate the invention, wherein other parts may be omitted or merely suggested.

### DETAILED DESCRIPTION OF EMBODIMENTS

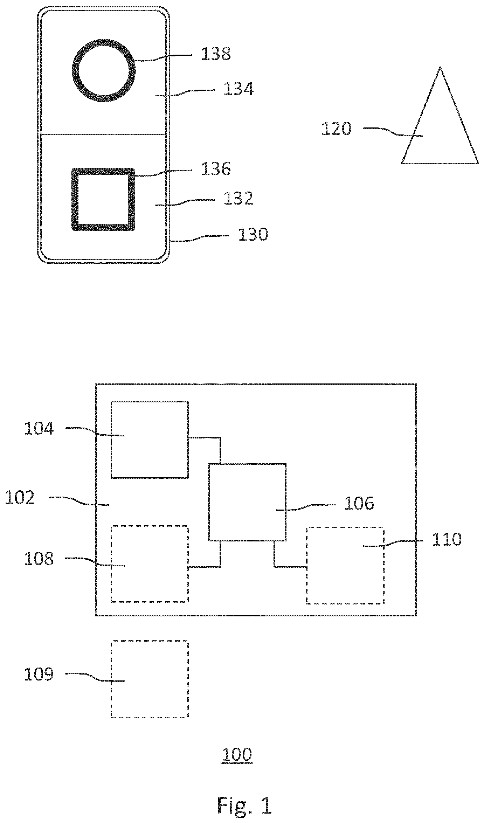

Fig. 1 shows schematically a system 100 comprising a controller 102, a lighting control device 130 and a lighting unit 120. The controller 102 is configured to configure a lighting system (which comprises one or more lighting units 120, a memory and the lighting control device 130). The lighting control device 130 comprises two user input elements 132, 134, and the user input elements 132, 134 each comprise respective icons 136, 138. The icons 136, 138 (in Figs. 1, 2 and 3 illustratively shown as a circle and a square) are indicative of respective control functions of the lighting system. The controller 102 comprises an input 104 configured to obtain an image comprising the lighting control device 130. The controller 102 further comprises a processor 106 configured to analyze the image, identify one or more user input elements 132, 134 in the image, identify one or more icons 136, 138 that have been applied to the one or more respective user input elements 132, 134 and determine one or more respective control functions of the one or more respective identified icons 136, 138. The processor 106 is further configured to configure the lighting system by associating the one or more respective control functions with the one or more respective user input elements 132, 134 and storing an association between the control function and the user input element in the memory, such that when a user input element (e.g. user input element 132) is activated by a user, one or more lighting units 120 of the lighting system are controlled in accordance with the respective control function (e.g. the control function associated with user input element 132). The memory may be a local or a remote memory.

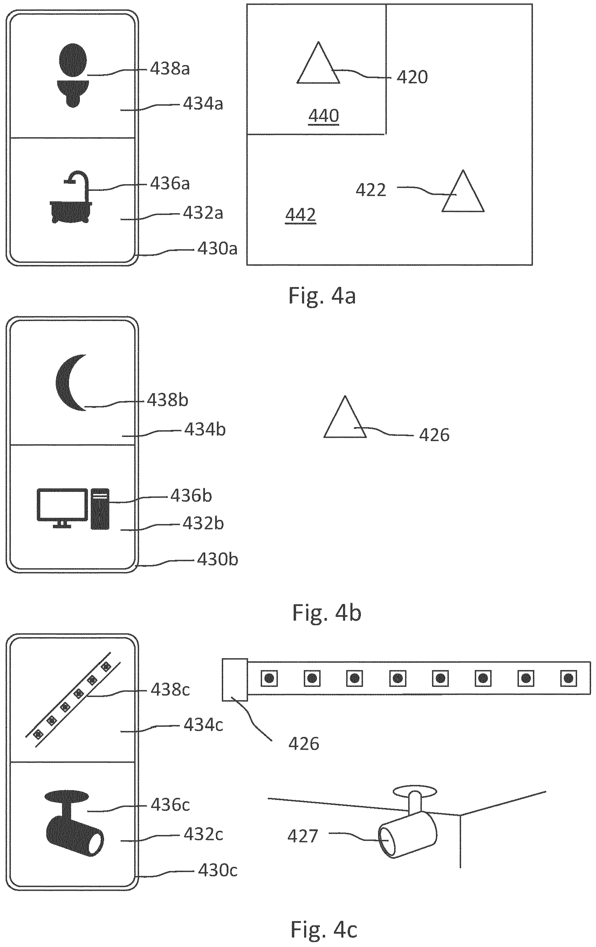

The lighting control device 130 may be any type of lighting control device comprising one or more user input elements 132, 134 configured to receive a user input to activate a control function of the lighting system. The lighting control device may, for example, be a touch sensitive surface (e.g. a part of a luminaire) or a (wireless) light switch. The light switch may comprise one or more user input elements, for instance push/touch buttons, rotary buttons, etc. A user may apply different icons 136, 138 to the user input elements 132, 134. A user may, for example, apply an icon indicative of a certain light setting to a button of a light switch such that the button will be configured to control one or more lighting units 120 according to that light setting when the button is pressed, or apply an icon indicative of dim control to a rotary button such that the rotary button will be configured to dim one or more lighting units 120 up/down when the rotary button is rotated. Further examples of icons and respective control functions are provided below with reference to Figs. 4a-4c.

The icons are indicative control functions of the lighting system. The control functions may be recognizable by the user. An icon may, for example, show an area of the lighting system (e.g. a restroom or a bathroom, as shown in Fig. 4a), or a light setting (e.g. a night setting or an office setting, as shown in Fig. 4b), which may enable the user to recognize the control function of an icon.

The control functions of the icons may be predefined, and a memory (e.g. a local memory 108, or a remote memory 109 accessible via a network or the internet) may store associations between icons and their respective control functions. Alternatively, the control functions of the icons may be undefined and may be determined by analyzing the icon, for instance by applying image recognition techniques to the icon in the image to determine a (possible) control function of the icon.

The icons 136, 138 may, for example, be adhesive stickers, transparent replaceable stickers, magnets, etc. which may be attachable to the user input elements 132, 134. Alternatively, the icons 136, 138 may be applied to the user input elements 132, 134 by, for instance, drawing the icons 136, 138 on the user input elements 132, 134.

The controller 102 may is configured to configure the lighting system based on one or more identified icons 136, 138 in an image that comprises the lighting control device 130 and its one or more user input elements 132, 134. The controller 102 may, for example, be comprised in a portable user device, such as a smartphone, a tablet pc, a smartwatch, etc. Alternatively, the controller 102 may be comprised in a central control device (e.g. a hub, a bridge, a central home control system, etc.) of the lighting system. Alternatively, the controller 102 may be located on a server remote from the lighting system, and be connected to the lighting system via the internet.

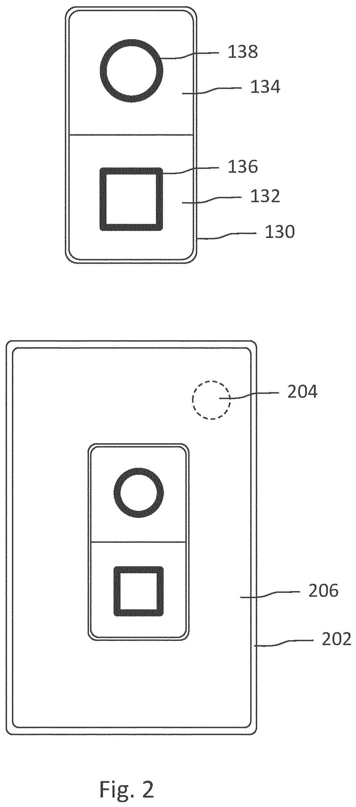

The controller 102 comprises an input 104 configured to obtain an image comprising the lighting control device. The image has been captured by a camera, for instance a camera of a portable device such as a smartphone, a tablet pc, smart glasses, etc. Fig. 2 illustrates an example of a portable device 202 comprising a camera 204 and a display 206 showing the captured image. In an example, the controller 102 may be comprised in a portable device such as the portable device 202 of Fig. 2, and the input 104 may be an input 104 of the processor 106. In another example, the controller 102 may be comprised in a device (e.g. a central control device such as a bridge or a hub, or a remote device such as a remote server) that does not comprise the camera. The input 104 may be a communication unit configured to receive the image from an image capturing device (e.g. a smartphone, a camera, etc.) via a (wireless) network.

The processor 106 (e.g. circuitry, a microcontroller, etc.) is configured to analyze the image to identify the one or more user input elements 132, 134 in the image, and to identify (detect, recognize) the one or more icons 132, 134 that have been applied to the user input elements 132, 134. Such image analysis technologies are known in the art and will therefore not be discussed in detail.

The processor 106 is further configured to determine the control function of the identified icon. The processor 106 may be configured to access a memory (e.g. a local memory 108, or a remote memory 109 accessible via a network or the internet). The memory 108, 109 may store associations (e.g. a look-up table) between (predefined) icons and control functions. The processor 106 (or a remote processor) may be configured to compare the icon identified in the image (e.g. the circle 138 in Fig. 1) with the icons stored in the memory 108, 109, and to select, based on the comparison, for the identified icon (e.g. the circle 138) a respective control function. Alternatively, the control functions of the icons may be undefined (i.e. not predefined and stored in a memory 108, 109) and the processor 106 (or a remote processor) may be configured to determine the control function of an icon by analyzing the icon, for instance by applying image recognition techniques to the icon in the image to determine a (possible) control function of the icon. Examples of control functions are provided below with reference to Figs. 4a-4c.

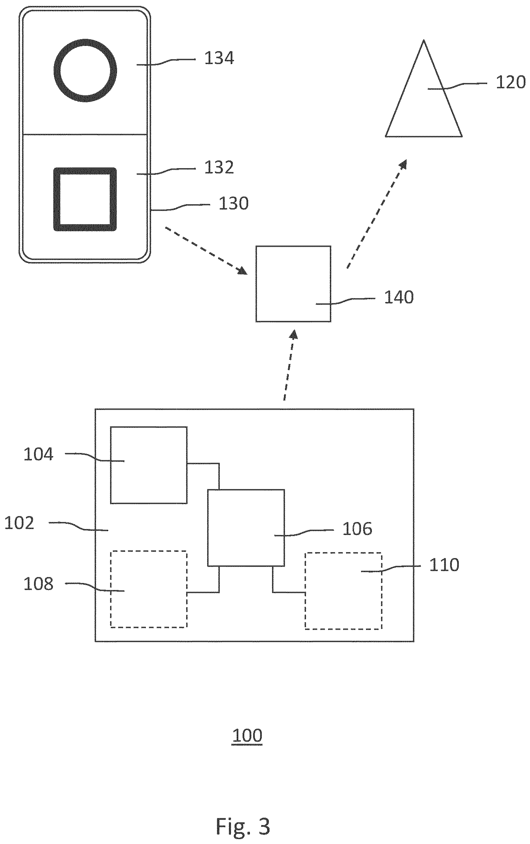

The processor 106 is further configured to configure the lighting system by associating the determined control function with the user input element, such that when the user input element is activated by a user, one or more lighting units 120 of the lighting system are controlled in accordance with the control function. After determining the control functions for one or more user input elements 132, 134 based on the identified icons, the processor 106 may configure the lighting system accordingly. The processor 106 may store the association between the control function and the user input element in a memory 108, 109 of the lighting system. The controller 102 may comprise a transmitter 110 configured to communicate (e.g. via a wireless network) the association to one or more devices of the lighting system. The processor 106 may, for example, store the association in a memory of the lighting unit 120, such that when the lighting unit 160 receives a control signal indicative of an activation of a user input element, the respective control function is performed. Alternatively, the processor 106 may, for example, store the association in a memory of the lighting control device 130, which may communicate a control signal to the lighting unit 120, which control signal is indicative of the control function associated with the activated user input element. Alternatively, the processor 106 may, for example, store the association in a memory 109 of a central controller of the lighting system. Fig. 3 illustrates an example wherein the association is stored in central controller 140. The central controller 140 may receive a control signal from the lighting control device 130 indicative of an activation of a user input element, whereupon the central controller 140 communicates another signal indicative of the respective control function to the lighting unit 120. It should be understood that the above-mentioned system-architectures are mere examples, and that the skilled person is able to design alternatives without departing from the scope of the appended claims.

The one or more lighting units 120 comprise one or more (LED) light sources. The one or more lighting unit 120 may be light bulbs, light strips, TLEDs, light tiles, etc. The one or more lighting units 120 may comprise a control unit, such as a microcontroller (not shown), for controlling the light output generated by the one or more light sources (e.g. an LED light source) based on received lighting control commands (which may be received from the lighting control device 130, either directly or indirectly via, for example, a central control device 140). A lighting control command may comprise lighting control instructions for controlling the light output, such as the color, intensity, saturation, beam size, beam shape, etc. of the one or more light sources.

Figs. 4a-4c illustrate examples of icons 436a, 438a, 436b, 438b, 436c, 438c that have been applied to user input elements 432a, 434a, 432b, 434b, 432c, 434c of respective lighting control devices 430a, 430b, 430c.

Fig. 4a illustrates an example wherein the control functions of the icons are related to respective areas of the lighting system. The processor 106 may be configured to configure the lighting system by associating the respective areas with the respective user input elements, such that when a user input element is activated by a user, one or more lighting units located in the respective area are controlled. For instance, a first lighting unit 420 may have been installed in a first area 440, and a second lighting unit 422 may have been installed in a second area 442. The first and second lighting unit may have been commissioned and be associated with the respective areas 422, 442. In the example of Fig. 4a, the first area 440 may be a restroom and the second area 442 may be a bathroom. A user may apply a first icon 438a indicative of the first area 440 (the restroom) to a first user input element 434a, and apply a second icon 436a indicative of the second area 442 (the bathroom) to a second user input element 432a. The user may then capture an image of the lighting control device 430a, whereupon the icons 438a, 436a are identified, and their respective user input elements 434a, 432a are associated with the respective areas 440, 442 (for instance by storing the associations in a memory 108, 109), such that when the first user input element 434a is activated, the first lighting unit 420 in the first area 440 is controlled and such that when the second user input element 432a is activated, the second lighting unit 422 in the second area 442 is controlled. The lighting units 420, 422 located in the respective areas may for instance be controlled according to a predefined light setting, a user-defined light setting or a system-defined light setting.

Fig. 4b illustrates an example wherein the control functions of the icons are related to respective light settings. The processor 106 may be configured to configure the lighting system by associating the respective lights settings with the respective user input elements, such that when a user input element is activated by a user, one or more lighting units are controlled according to the light setting. In the example of Fig. 4b, the first icon 438b may be an icon indicative of a night light setting (e.g. a light setting/scene defined by low dim levels for one or more lighting units), and the second icon may be indicative of an office light setting (e.g. an energizing light setting defined by bright cool white light settings for one or more lighting units) . A user may apply the first icon 438ab indicative of the first night light setting to a first user input element 434b, and apply the second icon 436b indicative of the office light setting to the second user input element 432b. The user may then capture an image of the lighting control device 430b, whereupon the icons 438b, 436b are identified, and their respective user input elements 434b, 432b are associated with the respective light settings (for instance by storing the associations in a memory 108, 109), such that when the first user input element 434b is activated, the lighting unit 426 is controlled according to the night light setting, and such that when the second user input element 432b is activated, the lighting unit 426 is controlled according to the office light setting. The icon may have a color, and the color of the icon may be indicative of a light color of the light setting. A user may, for example, have access to multiple colored icons that can be attached to the user input elements. A user may, for example, attach a blue icon to a user input element, and the lighting system may be configured such that one or more lighting units 120 are controlled according to a blue light setting when the user activates that user input element.

Fig. 4c illustrates an example wherein the control functions of the icons are related to respective types of lighting units of the lighting system. The processor 106 may be configured to configure the lighting system by associating the respective types of lighting unit with the respective user input elements, such that when a user input element is activated by a user, one or more lighting units of the respective type are controlled. For instance, a first lighting unit 426 may be of a first type (e.g. an LED strip), and a second lighting unit 427 may be of a second type (e.g. a spotlight). This information may be stored in a memory of the lighting system. A user may apply a first icon 438c indicative of a first type (an LED strip) to a first user input element 434c, and apply a second icon 436c indicative of the a second type (a spotlight) to a second user input element 432c. The user may then capture an image of the lighting control device 430c, whereupon the icons 438c, 436c are identified, and their respective user input elements 434c, 432c are associated with the respective types (for instance by storing the associations in a memory 108, 109), such that when the first user input element 434c is activated, the lighting unit 426 of the first type (LED strip) is controlled and such that when the second user input element 432c is activated, the lighting unit 427 of the second type (spotlight) is controlled. The lighting units 426, 427 may for instance be controlled according to a predefined light setting, a user-defined light setting or a system-defined light setting.

The processor 106 may be further configured to identify a first and a second user input element 132, 134 in the image based on an orientation of the lighting control device 130. It may occur that the lighting control device 130 is symmetrical (such as the lighting control device as depicted in Fig. 1), which may cause an ambiguity when determining which lighting control element is which. The orientation of the lighting control device may, for instance, be determined by detecting one or more surface features of the lighting control element in the image indicative of an orientation of the lighting control device. The lighting control device may, for example, comprise a logo which may be detected in the image, which enables determining the orientation of the lighting control device 130. Alternatively, the lighting control device may have a predefined orientation. The lighting control device may be configured to be attached to a wall in a single orientation only (e.g. due to the location of attachment means of the lighting control device 130). This results in that the lighting control elements have a predefined locations with respect to the lighting control device, which enables the processor 106 to identify the respective lighting control elements. Alternatively, the orientation may be determined based on a signal received from an orientation sensor (not shown) comprised in the lighting control device 130. Alternatively, the orientation may be determined based on a user input received from a user via a user interface, for instance a touch sensitive display comprised in a portable device 202.

The processor 106 may be configured to detect a plurality of icons on a single user input element, each icon indicative of a respective control function. The processor 106 may be further configured to configure the lighting system by associating the plurality of control functions with that user input element, such that when that user input element is activated by a user, one or more lighting units of the lighting system are controlled in accordance with the plurality of control functions. A user may, for example, have applied different icons to a single user input element, for instance icon 438a and icon 438b. The processor 106 may identify both icons of the user input element, and determine, based on the identified icons, a plurality of control functions for the single user input element, which, in this example, would be to associate a night light setting and the restroom area with the user input element, such that when a user would activate the user input element the lighting unit 420 in the restroom would be controlled according to a night light setting.

The processor 106 may be further configured to detect if a user has replaced an initial icon with a new icon, and the processor 196 may reconfigure the lighting system based on the replacement of the initial icon. The processor 106 may, similar to the initial configuration, obtain, via the input 104, a second image captured by the camera, the second image capturing the lighting control device 130, analyze the second image, identify the user input element 132, 134 in the second image, identify a new icon on the user input element, determine that the new icon has replaced the icon that was previously located on the user input element, determine a new control function of the identified new icon, and configure the lighting system by associating the new control function with the user input element, such that when the user input element is activated by a user, one or more lighting units of the lighting system are controlled in accordance with the new control function. This enables the user to reconfigure the lighting system.

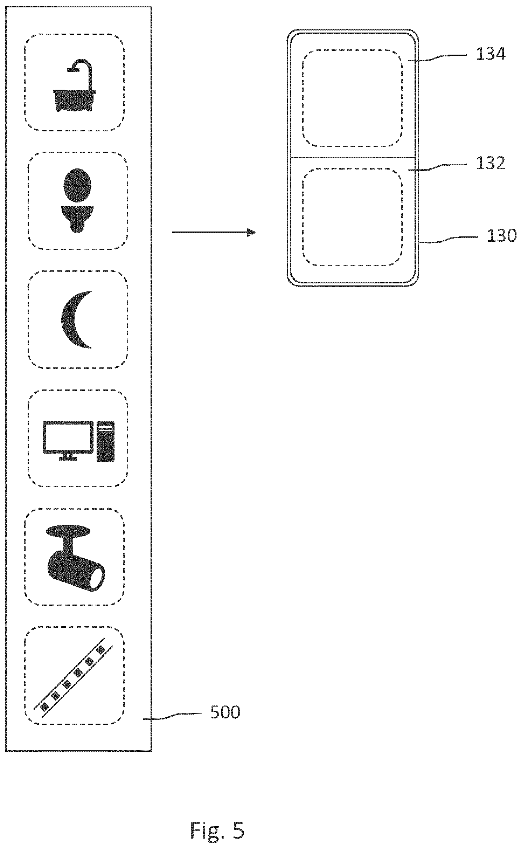

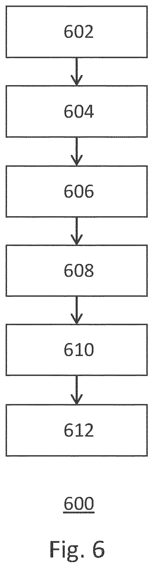

Fig. 5 illustrates an example a kit of parts comprising a plurality of attachable icons 500 (e.g. stickers on a sticker sheet, replaceable vinyl stickers, magnets, etc.) and the lighting control device 130. A user may take one or more of the stickers and apply them to one or more of the user input elements 132, 134, and perform the above-mentioned steps to configure the lighting system. The kit of parts may further comprise the one or more lighting units 120. The kit of parts may further comprise a (downloadable) computer program product configured to execute the steps of the method of the appended claims (as also illustrated in Fig. 6).

Fig. 6 shows schematically a method 600 of configuring a lighting system. The lighting system comprising the lighting control device 130, the lighting control device 130 comprising a user input element, wherein the user input element comprises an icon indicative of a control function of the lighting system. The method 600 comprises:
- obtaining 602 an image comprising the lighting control device,
- analyzing 604 the image,
- identifying 606 the user input element in the image,
- identifying 608 the icon that has been applied to the user input element,
- determining 610 the control function of the identified icon,
- configuring 612 the lighting system by associating the control function with the user input element, such that when the user input element is activated by a user, one or more lighting units of the lighting system are controlled in accordance with the control function.

The method 600 may be executed by computer program code of a computer program product when the computer program product is run on a processing unit of a computing device, such as the processor 104 of the system 100.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer or processing unit. In the device claim enumerating several means, several of these means may be embodied by one and the same item of hardware.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors or even the 'cloud'.

Storage media suitable for storing computer program instructions include all forms of nonvolatile memory, including but not limited to EPROM, EEPROM and flash memory devices, magnetic disks such as the internal and external hard disk drives, removable disks and CD-ROM disks. The computer program product may be distributed on such a storage medium, or may be offered for download through HTTP, FTP, email or through a server connected to a network such as the Internet.

## Claims

1. A method (600) of configuring a lighting system, the lighting system comprising a lighting control device (130) and a memory, the lighting control device (130) comprising a user input element (132), wherein the user input element (132) comprises an icon indicative of a control function of the lighting system, the method (600) comprising:
- obtaining an image comprising the lighting control device (130),
- analyzing the image,
- identifying the user input element (132) in the image,
- identifying the icon that has been applied to the user input element (132),
- determining the control function of the identified icon,
and the method **characterised by** comprising:
- configuring the lighting system by associating the control function with the user input element (132) and storing an association between the control function and the user input element in the memory, such that when the user input element (132) is activated by a user, one or more lighting units (120) of the lighting system are controlled in accordance with the control function.

2. The method (600) of claim 1, wherein the control function of the identified icon is related to an area of the lighting system, and wherein the lighting system is configured by associating the area with the user input element (132), such that when the user input element (132) is activated by a user, one or more lighting units (120) located in the area are controlled.

3. The method (600) of claim 1, wherein the control function of the identified icon is related to a light setting, and wherein the lighting system is configured by associating the light setting with the user input element (132), such that when the user input element (132) is activated by a user, one or more lighting units (120) of the lighting system are controlled according to the light setting.

4. The method (600) of claim 3, wherein a color of the icon is indicative of a color of the light setting.

5. The method (600) of claim 1, wherein the control function of the icon is related to a type of lighting unit, and wherein the lighting system is configured by associating the type of lighting unit with the user input element (132), such that when the user input element (132) is activated by a user, one or more lighting units (120) of the type are controlled.

6. The method (600) of any preceding claim, wherein the icon has been applied to the user input element (132) by a user.

7. The method (600) of any preceding claim, wherein the lighting control device (130) comprises a second user input element (134) comprising a second icon (138) indicative of a second control function, wherein the method (600) comprises:
- identifying the second user input element (134) in the image,
- identifying the second icon (138) that has been applied to the second user input element (134),
- determining the second control function of the identified second icon (138),
- configuring the lighting system by associating the second control function with the second user input element (134), such that when the second user input element (134) is activated by a user, one or more lighting units (120) of the lighting system are controlled in accordance with the second control function.

8. The method (600) claim 7, wherein the steps of identifying the user input element (132) and the second user input element (134) comprises:
- determining an orientation of the lighting control device (130), and
- identifying the user input elements (132) in the image based on the orientation of the lighting control device (130).

9. The method (600) of any preceding claim, wherein the user input element (132) comprises a plurality of icons, each indicative of a respective control function, and wherein the lighting system is configured by associating the plurality of control functions with the user input element (132), such that when the user input element (132) is activated by a user, one or more lighting units (120) of the lighting system are controlled in accordance with the plurality of control functions.

10. The method (600) of any preceding claim, wherein the step of determining the control function of the identified icon (136) comprises:
- accessing a memory, the memory storing associations between icons and control functions, and
- comparing the identified icon (138) with the stored icons, and
- selecting, based on the comparison, for the identified icon a respective control function.

11. The method (600) of any preceding claim, wherein the method (600) further comprises:
- obtaining a second image captured by the camera, the second image capturing the lighting control device (130),
- analyzing the second image,
- identifying the user input element (132) in the second image,
- identifying a new icon on the user input element (132),
- determining that the new icon has replaced the icon (136) that was previously located on the user input element (132),
- determining a new control function of the identified new icon, and
- configuring the lighting system by associating the new control function with the user input element (132), such that when the user input element (132) is activated by a user, one or more lighting units (120) of the lighting system are controlled in accordance with the new control function.

12. A computer program product for a computing device, the computer program product comprising computer program code to perform the method (600) of any preceding claim when the computer program product is run on a processing unit of the computing device.

13. A controller for configuring a lighting system, the lighting system comprising a lighting control device (130) and a memory, the lighting control device (130) comprising a user input element (132), wherein the user input element (132) comprises an icon (136) indicative of a control function of the lighting system, the controller comprising:
an input configured to obtain an image comprising the lighting control device (130), and
a processor configured to
- analyze the image,
- identify the user input element (132) in the image,
- identify the icon (136) that has been applied to the user input element (132),
- determine the control function of the identified icon (136),
and **characterised in that** the processor is configured to:
- configure the lighting system by associating the control function with the user input element (132) and store an association between the control function and the user input element in the memory, such that when the user input element (132) is activated by a user, one or more lighting units (120) of the lighting system are controlled in accordance with the control function.

14. A lighting system comprising:
- the controller of claim 13,
- a plurality of icons attachable to the user input element (132) by a user, wherein the icons are indicative of respective control functions of the lighting system, and
- one or more lighting units (120).

15. A kit of parts comprising:
- a lighting control device (130) comprising a user input element (132) for controlling a lighting unit of a lighting system,
- a plurality of icons (500) attachable to the user input element (132) by a user, wherein the icons are indicative of respective control functions of the lighting unit, and
- the computer program product of claim 12.

## Patentansprüche

1. Verfahren (600) zum Konfigurieren eines Beleuchtungssystems, wobei das Beleuchtungssystem eine Beleuchtungssteuervorrichtung (130) und einen Speicher umfasst, wobei die Beleuchtungssteuervorrichtung (130) ein Benutzereingabeelement (132) umfasst, wobei das Benutzereingabeelement (132) ein Symbol umfasst, das eine Steuerfunktion des Beleuchtungssystems anzeigt, wobei das Verfahren (600) umfasst:
- Erhalten eines Bildes, umfassend die Beleuchtungssteuervorrichtung (130),
- Analysieren des Bildes,
- Identifizieren des Benutzereingabeelements (132) im Bild,
- Identifizieren des Symbols, das auf das Benutzereingabeelement (132) angewendet wurde,
- Bestimmen der Steuerfunktion des identifizierten Symbols,
und wobei das Verfahren **dadurch gekennzeichnet ist, dass** es umfasst:
- Konfigurieren des Beleuchtungssystems durch Verknüpfen der Steuerfunktion mit dem Benutzereingabeelement (132) und Speichern einer Verknüpfung zwischen der Steuerfunktion und dem Benutzereingabeelement im Speicher, so dass, wenn das Benutzereingabeelement (132) durch einen Benutzer aktiviert wird, eine oder mehrere Beleuchtungseinheiten (120) des Beleuchtungssystems entsprechend der Steuerfunktion gesteuert werden.

2. Verfahren (600) nach Anspruch 1, wobei die Steuerfunktion des identifizierten Symbols mit einem Bereich des Beleuchtungssystems in Zusammenhang steht, und wobei das Beleuchtungssystem durch Zuordnen des Bereichs zum Benutzereingabeelement (132) konfiguriert wird, so dass, wenn das Benutzereingabeelement (132) durch einen Benutzer aktiviert wird, eine oder mehrere in dem Bereich befindliche Beleuchtungseinheiten (120) gesteuert werden.

3. Verfahren (600) nach Anspruch 1, wobei die Steuerfunktion des identifizierten Symbols mit einer Lichteinstellung zusammenhängt, und wobei das Beleuchtungssystem durch Verknüpfen der Lichteinstellung mit dem Benutzereingabeelement (132) konfiguriert wird, so dass, wenn das Benutzereingabeelement (132) durch einen Benutzer aktiviert wird, eine oder mehrere Beleuchtungseinheiten (120) des Beleuchtungssystems entsprechend der Lichteinstellung gesteuert werden.

4. Verfahren (600) nach Anspruch 3, wobei eine Farbe des Symbols eine Farbe der Lichteinstellung anzeigt.

5. Verfahren (600) nach Anspruch 1, wobei die Steuerfunktion des Symbols mit einem Typ einer Beleuchtungseinheit in Zusammenhang steht, und wobei das Beleuchtungssystem durch Zuordnen des Typs der Beleuchtungseinheit zu dem Benutzereingabeelement (132) konfiguriert wird, so dass, wenn das Benutzereingabeelement (132) durch einen Benutzer aktiviert wird, eine oder mehrere Beleuchtungseinheiten (120) dieses Typs gesteuert werden.

6. Verfahren (600) nach einem der vorstehenden Ansprüche, wobei das Symbol von einem Benutzer auf das Benutzereingabeelement (132) angewendet wurde.

7. Verfahren (600) nach einem der vorstehenden Ansprüche, wobei die Beleuchtungssteuervorrichtung (130) ein zweites Benutzereingabeelement (134) umfasst, das ein zweites Symbol (138) umfasst, das eine zweite Steuerfunktion anzeigt, wobei das Verfahren (600) umfasst:
- Identifizieren des zweiten Benutzereingabeelements (134) im Bild,
- Identifizieren des zweiten Symbols (138), das auf das zweite Benutzereingabeelement (134) angewendet wurde,
- Bestimmen der zweiten Steuerfunktion des identifizierten zweiten Symbols (138),
- Konfigurieren des Beleuchtungssystems durch Verknüpfen der zweiten Steuerfunktion mit dem zweiten Benutzereingabeelement (134), so dass, wenn das zweite Benutzereingabeelement (134) durch einen Benutzer aktiviert wird, eine oder mehrere Beleuchtungseinheiten (120) des Beleuchtungssystems gemäß der zweiten Steuerfunktion gesteuert werden.

8. Verfahren (600) nach Anspruch 7, wobei die Schritte zum Identifizieren des Benutzereingabeelements (132) und des zweiten Benutzereingabeelements (134) umfassen:
- Bestimmen einer Ausrichtung der Beleuchtungssteuervorrichtung (130), und
- Identifizieren der Benutzereingabeelemente (132) im Bild basierend auf der Ausrichtung der Beleuchtungssteuervorrichtung (130).

9. Verfahren (600) nach einem der vorstehenden Ansprüche, wobei das Benutzereingabeelement (132) eine Vielzahl von Symbolen umfasst, die jeweils eine entsprechende Steuerfunktion anzeigen, und wobei das Beleuchtungssystem durch Verknüpfen der Vielzahl von Steuerfunktionen mit dem Benutzereingabeelement (132) konfiguriert wird, so dass, wenn das Benutzereingabeelement (132) durch einen Benutzer aktiviert wird, eine oder mehrere Beleuchtungseinheiten (120) des Beleuchtungssystems entsprechend der Vielzahl von Steuerfunktionen gesteuert werden.

10. Verfahren (600) nach einem der vorstehenden Ansprüche, wobei der Schritt des Bestimmens der Steuerfunktion des identifizierten Symbols (136) umfasst:
- Zugriff auf einen Speicher, der Verknüpfungen zwischen Symbolen und Steuerfunktionen speichert, und
- Vergleichen des identifizierten Symbols (138) mit den gespeicherten Symbolen und
- Auswählen einer entsprechenden Steuerfunktion für das identifizierte Symbol basierend auf dem Vergleich.

11. Verfahren (600) nach einem der vorstehenden Ansprüche, wobei das Verfahren (600) ferner umfasst:
- Erhalten eines zweiten von der Kamera aufgenommenen Bildes, wobei das zweite Bild die Beleuchtungssteuervorrichtung (130) aufnimmt,
- Analysieren des zweiten Bildes,
- Identifizieren des Benutzereingabeelements (132) im zweiten Bild,
- Identifizieren eines neuen Symbols auf dem Benutzereingabeelement (132),
- Bestimmen, dass das neue Symbol das Symbol (136) ersetzt hat, das sich zuvor auf dem Benutzereingabeelement (132) befand,
- Bestimmen einer neuen Steuerfunktion des identifizierten neuen Symbols und
- Konfigurieren des Beleuchtungssystems durch Zuordnen der neuen Steuerfunktion zum Benutzereingabeelement (132), so dass, wenn das Benutzereingabeelement (132) durch einen Benutzer aktiviert wird, eine oder mehrere Beleuchtungseinheiten (120) des Beleuchtungssystems gemäß der neuen Steuerfunktion gesteuert werden.

12. Computerprogrammprodukt für eine Rechenvorrichtung, das Computerprogrammprodukt umfassend einen Computerprogrammcode, um das Verfahren (600) nach einem der vorstehenden Ansprüche durchzuführen, wenn das Computerprogrammprodukt auf einer Verarbeitungseinheit der Rechenvorrichtung ausgeführt wird.

13. Steuerung zum Konfigurieren eines Beleuchtungssystems, wobei das Beleuchtungssystem eine Beleuchtungssteuervorrichtung (130) und einen Speicher umfasst, wobei die Beleuchtungssteuervorrichtung (130) ein Benutzereingabeelement (132) umfasst, wobei das Benutzereingabeelement (132) ein Symbol (136) umfasst, das eine Steuerfunktion des Beleuchtungssystems anzeigt, wobei die Steuerung umfasst:
eine Eingabe, die konfiguriert ist, um ein Bild zu erhalten, das die Beleuchtungssteuervorrichtung (130) umfasst, und
einen Prozessor, der konfiguriert ist zum
- Analysieren des Bildes,
- Identifizieren des Benutzereingabeelements (132) im Bild,
- Identifizieren des Symbols (136), das auf das Benutzereingabeelement (132) angewendet wurde,
- Bestimmen der Steuerfunktion des identifizierten Symbols (136),
und **dadurch gekennzeichnet, dass** der Prozessor konfiguriert ist zum:
- Konfigurieren des Beleuchtungssystems durch Verknüpfen der Steuerfunktion mit dem Benutzereingabeelement (132) und Speichern einer Verknüpfung zwischen der Steuerfunktion und dem Benutzereingabeelement im Speicher, so dass, wenn das Benutzereingabeelement (132) durch einen Benutzer aktiviert wird, eine oder mehrere Beleuchtungseinheiten (120) des Beleuchtungssystems entsprechend der Steuerfunktion gesteuert werden.

14. Beleuchtungssystem, umfassend:
- die Steuerung nach Anspruch 13,
- eine Vielzahl von Symbolen, die von einem Benutzer an das Benutzereingabeelement (132) angefügt werden können, wobei die Symbole jeweilige Steuerfunktionen des Beleuchtungssystems anzeigen, und
- eine oder mehrere Beleuchtungseinheiten (120).

15. Teilesatz, umfassend:
- eine Beleuchtungssteuervorrichtung (130), umfassend ein Benutzereingabeelement (132) zum Steuern einer Beleuchtungseinheit eines Beleuchtungssystems,
- eine Vielzahl von Symbolen (500), die von einem Benutzer an das Benutzereingabeelement (132) angefügt werden können, wobei die Symbole jeweilige Steuerfunktionen der Beleuchtungseinheit anzeigen, und
- das Computerprogrammprodukt nach Anspruch 12.

## Revendications

1. Procédé (600) permettant de configurer un système d'éclairage, le système d'éclairage comprenant un dispositif de commande d'éclairage (130) et une mémoire, le dispositif de commande d'éclairage (130) comprenant un élément d'entrée utilisateur (132), dans lequel l'élément d'entrée utilisateur (132) comprend une icône indiquant une fonction de commande du système d'éclairage, le procédé (600) comprenant :
- l'obtention d'une image comprenant le dispositif de commande d'éclairage (130),
- l'analyse de l'image,
- l'identification de l'élément d'entrée utilisateur (132) dans l'image,
- l'identification de l'icône qui a été appliquée à l'élément d'entrée utilisateur (132),
- la détermination de la fonction de commande de l'icône identifiée,
et le procédé étant **caractérisé par le fait qu'**il comprend :
- la configuration du système d'éclairage en associant la fonction de commande à l'élément d'entrée utilisateur (132) et en stockant une association entre la fonction de commande et l'élément d'entrée utilisateur dans la mémoire, de telle sorte que, lorsque l'élément d'entrée utilisateur (132) est activé par un utilisateur, une ou plusieurs unités d'éclairage (120) du système d'éclairage sont commandées conformément à la fonction de commande.

2. Procédé (600) selon la revendication 1, dans lequel la fonction de commande de l'icône identifiée est liée à une zone du système d'éclairage, et dans lequel le système d'éclairage est configuré en associant la zone à l'élément d'entrée utilisateur (132), de telle sorte que, lorsque l'élément d'entrée utilisateur (132) est activé par un utilisateur, une ou plusieurs unités d'éclairage (120) situées dans la zone sont commandées.

3. Procédé (600) selon la revendication 1, dans lequel la fonction de commande de l'icône identifiée est liée à un réglage de lumière, et dans lequel le système d'éclairage est configuré en associant le réglage de lumière à l'élément d'entrée utilisateur (132), de telle sorte que, lorsque l'élément d'entrée utilisateur (132) est activé par un utilisateur, une ou plusieurs unités d'éclairage (120) du système d'éclairage sont commandées selon le réglage de lumière.

4. Procédé (600) selon la revendication 3, dans lequel une couleur de l'icône indique une couleur du réglage de lumière.

5. Procédé (600) selon la revendication 1, dans lequel la fonction de commande de l'icône est liée à un type d'unité d'éclairage, et dans lequel le système d'éclairage est configuré en associant le type d'unité d'éclairage à l'élément d'entrée utilisateur (132), de telle sorte que, lorsque l'élément d'entrée utilisateur (132) est activé par un utilisateur, une ou plusieurs unités d'éclairage (120) du type sont commandées.

6. Procédé (600) selon l'une quelconque revendication précédente, dans lequel l'icône a été appliquée à l'élément d'entrée utilisateur (132) par un utilisateur.

7. Procédé (600) selon l'une quelconque revendication précédente, dans lequel le dispositif de commande d'éclairage (130) comprend un second élément d'entrée utilisateur (134) comprenant une seconde icône (138) indiquant une seconde fonction de commande, dans lequel le procédé (600) comprend :
- l'identification du second élément d'entrée utilisateur (134) dans l'image,
- l'identification de la seconde icône (138) qui a été appliquée au second élément d'entrée utilisateur (134),
- la détermination de la seconde fonction de commande de la seconde icône identifiée (138),
- la configuration du système d'éclairage en associant la seconde fonction de commande au second élément d'entrée utilisateur (134), de telle sorte que, lorsque le second élément d'entrée utilisateur (134) est activé par un utilisateur, une ou plusieurs unités d'éclairage (120) du système d'éclairage sont commandées conformément à la seconde fonction de commande.

8. Procédé (600) selon la revendication 7, dans lequel les étapes d'identification de l'élément d'entrée utilisateur (132) et du second élément d'entrée utilisateur (134) consistent à :
- déterminer une orientation du dispositif de commande d'éclairage (130), et
- identifier les éléments d'entrée utilisateur (132) dans l'image sur la base de l'orientation du dispositif de commande d'éclairage (130).

9. Procédé (600) selon l'une quelconque revendication précédente, dans lequel l'élément d'entrée utilisateur (132) comprend une pluralité d'icônes, chacune indiquant une fonction de commande respective, et dans lequel le système d'éclairage est configuré en associant la pluralité de fonctions de commande à l'élément d'entrée utilisateur (132), de telle sorte que, lorsque l'élément d'entrée utilisateur (132) est activé par un utilisateur, une ou plusieurs unités d'éclairage (120) du système d'éclairage sont commandées conformément à la pluralité de fonctions de commande.

10. Procédé (600) selon l'une quelconque revendication précédente, dans lequel l'étape de détermination de la fonction de commande de l'icône identifiée (136) consiste à :
- accéder à une mémoire, la mémoire stockant des associations entre des icônes et des fonctions de commande, et
- comparer l'icône identifiée (138) avec les icônes stockées, et
- sélectionner, sur la base de la comparaison, une fonction de commande respective pour l'icône identifiée.

11. Procédé (600) selon l'une quelconque revendication précédente, dans lequel le procédé (600) comprend en outre :
- l'obtention d'une seconde image capturée par la caméra, la seconde image capturant le dispositif de commande d'éclairage (130),
- l'analyse de la seconde image,
- l'identification de l'élément d'entrée utilisateur (132) dans la seconde image,
- l'identification d'une nouvelle icône sur l'élément d'entrée utilisateur (132),
- le fait de déterminer que la nouvelle icône a remplacé l'icône (136) qui se trouvait précédemment sur l'élément d'entrée utilisateur (132),
- la détermination d'une nouvelle fonction de commande de la nouvelle icône identifiée, et
- la configuration du système d'éclairage en associant la nouvelle fonction de commande à l'élément d'entrée utilisateur (132), de telle sorte que, lorsque l'élément d'entrée utilisateur (132) est activé par un utilisateur, une ou plusieurs unités d'éclairage (120) du système d'éclairage sont commandées conformément à la nouvelle fonction de commande.

12. Produit-programme informatique pour un dispositif informatique, le produit-programme informatique comprenant un code de programme informatique pour réaliser le procédé (600) selon l'une quelconque revendication précédente, lorsque le produit-programme informatique est exécuté sur une unité de traitement du dispositif informatique.

13. Contrôleur permettant de configurer un système d'éclairage, le système d'éclairage comprenant un dispositif de commande d'éclairage (130) et une mémoire, le dispositif de commande d'éclairage (130) comprenant un élément d'entrée utilisateur (132), dans lequel l'élément d'entrée utilisateur (132) comprend une icône (136) indiquant une fonction de commande du système d'éclairage, le contrôleur comprenant :
une entrée configurée pour obtenir une image comprenant le dispositif de commande d'éclairage (130), et
un processeur configuré pour
- analyser l'image,
- identifier l'élément d'entrée utilisateur (132) dans l'image,
- identifier l'icône (136) qui a été appliquée à l'élément d'entrée utilisateur (132),
- déterminer la fonction de commande de l'icône identifiée (136),
et **caractérisé en ce que** le processeur est configuré pour :
- configurer le système d'éclairage en associant la fonction de commande à l'élément d'entrée utilisateur (132) et stocker une association entre la fonction de commande et l'élément d'entrée utilisateur dans la mémoire, de telle sorte que, lorsque l'élément d'entrée utilisateur (132) est activé par un utilisateur, une ou plusieurs unités d'éclairage (120) du système d'éclairage sont commandées conformément à la fonction de commande.

14. Système d'éclairage comprenant :
- le contrôleur selon la revendication 13,
- une pluralité d'icônes pouvant être fixées à l'élément d'entrée utilisateur (132) par un utilisateur, dans lequel les icônes indiquent des fonctions de commande respectives du système d'éclairage, et
- une ou plusieurs unités d'éclairage (120).

15. Kit de pièces comprenant :
- un dispositif de commande d'éclairage (130) comprenant un élément d'entrée utilisateur (132) pour commander une unité d'éclairage d'un système d'éclairage,
- une pluralité d'icônes (500) pouvant être fixées à l'élément d'entrée utilisateur (132) par un utilisateur, dans lequel les icônes indiquent des fonctions de commande respectives de l'unité d'éclairage, et
- le produit-programme informatique selon la revendication 12.
